Europäisches Patentamt

European Patent Office

Office européen des brevets

(11) Publication number: **0 335 538**
**A2**

(12) # EUROPEAN PATENT APPLICATION

(21) Application number: 89302659.1

(22) Date of filing: 17.03.89

(51) Int. Cl.⁴: **C22B 59/00** , **C22B 3/00** , **C01F 17/00**

(30) Priority: 31.03.88 US 176373

(43) Date of publication of application:
04.10.89 Bulletin 89/40

(84) Designated Contracting States:
AT CH DE ES FR GB IT LI NL SE

(71) Applicant: REO LIMITED PARTNERSHIP
5315 Great Oak Drive
Lakeland Florida 33801(US)

(72) Inventor: Berry, Willian Wesley
4778 Highlands Place Drive
Lakeland Florida 33813(US)
Inventor: Rossiter, Gordon John
6342 Butternut Drive
Lakeland Florida 33813(US)

(74) Representative: Pendlebury, Anthony et al
PAGE, WHITE & FARRER 54 Doughty Street
London WC1N 2LS(GB)

(54) Process for fractionating a mixture of rare earth metals by ion exchange.

(57) A continuous process for partially or completely fractionating a mixture of rare earth metals by ion exchange is disclosed. A leach liquor including rare earth elements is contacted with a cationic exchange resin and the rare earth elements is then contacted with progressively increasing concentrations of an alpha-hydroxy acid having a pH high enough to maintain the acid as a dissociated species but low enough so as not to exceed the solubility products of the rare earths. The various fractions may be subjected to further fractionation steps in one or more additional process levels.

FIGURE 1

EP 0 335 538 A2

# PROCESS FOR FRACTIONATING A MIXTURE OF RARE EARTH METALS BY ION EXCHANGE

The present invention relates to a process for fractionating a rare earth metal mixture, either fully into the individual rare earth elements or partially into a higher resolution fraction. More particularly the present invention relates to a novel process for fractionating a rare earth metal mixture by ion exchange.

Since their discovery, the art has long sought techniques for fractionating a mixture of rare earth metals either into the individual metals or, alternatively, into higher resolution fractions. Unfortunately, due to the very close similarity in properties among the rare earth elements, many of the time-proven conventional techniques employed by the art to fractionate a mixture have proven ineffective when applied to mixtures of rare earth metals.

One of the earliest techniques employed to fractionate a rare earth metal mixture was fractional crystallization. However, the number of crystallization stages required was typically quite high and thus, while of some use where only very small samples of rare earth were required, e.g., for research purposes, fractional crystallization techniques were long ago abandoned as a feasible method for obtaining large quantities of pure materials.

A limited number of rare earths have been successfully purified by selected oxidation and reduction techniques, wherein the valence state of a particular rare earth element can be changed and the change exploited by virtue of the different response of the charged rare earth to chemical or physical stimuli as compared to the unchanged rare earths. However, since few of the individual rare earths can be uniquely oxidized or reduced under a given condition, the technique is currently limited primarily to the removal of cerium from a rare earth mixture after its oxidation.

More recently, there have been developed solvent extraction techniques for fractionating a rare earth metal mixture. More specifically, it was observed that various organic solvents exhibit small but quantifiable differences in affinity for the individual rare earths. Thus, by using a series of extraction steps, it is possible to achieve a level of fractionation among the individual rare earth elements. Because solvent extraction techniques can be carried out continuously and on an industrial scale, they have become the primary means currently employed by the art for fractionating rare earth metal mixtures. However, while very high purity materials can be made utilizing solvent extraction, the technique is disadvantageous in that it requires an extremely large number of extraction stages. Thus, as the demand for higher purity rare earth metals increases the equipment and operating costs increase substantially.

Ion exchange techniques have also been employed to fractionate a mixture of rare earth metals. In a typical separation by ion exchange, of course, a resin is first loaded with exchangeable ions and then contacted with an aqueous solution containing the materials to be recovered. Such materials then diffuse to various sites on the resin and exchange for the exchangeable ion. An eluant is then passed through the resin where it selectively displaces the materials previously loaded onto the resin depending on the degree to which the resin has an affinity for the particular material. Thus, the materials having the least affinity for the resin are removed first and followed successively by the materials having progressively higher affinities for the resin until the material having the greatest affinity for the resin is finally removed. While the affinities of the materials for the resin might not always vary enough such that a perfect "cut" is obtained initially, it nonetheless is eventually possible to obtain a perfect cut so long as even a relatively small resin affinity difference exists.

Unfortunately, when conventional ion exchange techniques were applied to mixtures of rare earth metals, the rare earths were observed to have resin affinities which are so close that they behave as a single metal and thus, elute out together.

To overcome this insignificant difference in resin affinities among the rare earth elements and thus, to render rare earth mixtures amenable to ion exchange techniques, the art has employed a number of agents which form complexes with the rare earths, the complexed rare earths exhibiting different affinities for the resin even though the free rare earths do not. Among such complexing agents which have been utilized are citric acid, lactic acid, EDTA etc.

The current state of the art for complex ion exchange systems employs one or more fixed-bed columns which are subjected to the various process operations including loading of the resin with the exchangeable ion, contacting the resin with a mixture of metals which exchange for the exchangeable ion, and contacting the resin loaded with the rare earth ions with an eluant. The eluant is typically a single eluant stream which may include a complexing agent and which is adjusted to a relatively narrow concentration and pH range.

Thus, in U.S. Patent No. 2,539,282, a process for separating rare earths by ion exchange is disclosed. There is adsorbed into a cationic exchange resin a mixture of the rare earths from aqueous solutions of their water-soluble inorganic salts, preferably chlorides. A citric acid solution at a controlled pH is passed through a column of the adsorbed resin and successive portions of the eluate collected. The citric acid solution contains from 0.05 to 5% citric acid and has a pH. of 2.5 to 7.0. The pH is adjusted by the addition of ammonia or ammonium hydroxide to produce an ammonium citrate-citric acid buffer. In the higher concentrations of the citric acid a suitable solution has a pH at or near the lower value of the range, at an intermediate citric acid concentration a suitable pH is at or near the intermediate value of the range and at a lower citric acid concentration, the suitable pH is at or near the high value of the range.

There are slight variations in the preferred range depending upon whether the process is used for the separation of light rare earth elements (members of the cerium group) or heavy rare earth elements (members of the yttrium group). For example, using 0.1% citric acid, the preferred pH range of the aqueous solution is 5.5 to 6.3 for the separation of the light rare earth elements and 5.0 to 6.5 for the separation of heavy rare earth elements. It is necessary to use a citric acid solution having a pH within a narrow range since the pH has a marked effect on the degree of separation.

U.S. Patent No. 2,897,050 also discloses a process for fractionating a rare earth metal mixture by ion exchange. Eluting agents include the water-soluble salts of ethylenediaminetetra-acetic acid, citric acid, ammonium citrate, lactic acid or ammonium lactate. Preferably employed is a 0.1% solution of citric acid having a pH raised to between 6 and 8 by the addition. of ammonium hydroxide.

The eluate fractions are collected and, if it is desired to obtain still higher purity, such fractions are passed through one or more additional columns.

In U.S. Patent No. 4,394,353, a process is disclosed for fractionating a mixture of rare earth metals by ion exchange employing as complexing agents aminopolyacetic acids such as ethylene diamine tetracetic acid, 1,2-diaminocyclohexane tetracetic acid, N-hydroxyethyl ethylene diamine tetracetic acid, ethylene glycol-bis(2-aminoethyl) ether-N,N,N′,N′-tetracetic acid, diethylene tetramine pentacetic acid, bis(2-aminoethyl)ether-N,N,N′,N′-tetracetic acid, nitrotriacetic acid and iminodiacetic acid and oxycarboxylic acids such as citric acid, lactic acid, glycolic acid, malic acid, and tartaric acid. It is necessary to adjust the pH of a complexing agent solution for developing a rare earth metal adsorption zone in such a manner that at the contact of the complexing agent with rare earth metal ions, formation of complexes between the rare earth metal ions and the complexing agent proceeds without causing precipitation due to the hydrolysis of the rare earth metal ions and thus reducing the absorbability of the rare earth metal ions to the cation exchanger.

The patents described above typify the current state of the art of ion exchange processes for fractionating mixtures of rare earth metals. Thus, a plurality of fixed columns are arranged to operate in a process sequence including loading of the rare earths onto the column, initiating an elution procedure with a complexing agent to achieve chromatographic separation via the series of fixed bed columns, collection of eluant fractions and either subsequent recovery of the rare earths in those fractions or further processing of those fractions to obtain new fractions having higher degrees of resolution.

Generally, the above-described ion exchange fractionation processes characterizing the art to date have enjoyed limited success. In the first place, while such techniques do indeed allow one to obtain a high purity product, such high purities are obtained only if one is willing to accept the cost of high dilutions of the rare earths. More specifically, to carry out the processes in fixed beds of ion exchange resin' complexing agents had to be selected which were of relatively low solubility in water (such as citric acid) thereby providing a slow response time, even on the order of days to obtain dilute high purity fractions. Additionally, the ion-exchange processes of the prior art have typically not been very flexible. Thus, the process had to be designed with a specific feed: eluant, and final product in mind since changes in any one of these variables generally necessitate changes in the feed to resin ratio required, the pH and/or concentration of the eluant, and the number and type of product fraction streams produced. For example, if a change in the process results in the production of one or more additional product fraction streams provision have to be made for such additional streams, etc. This is very difficult to achieve with conventional fixed bed technology in view of the complicated valving and timing mechanisms required to constantly change the direction and volume of streams into and out of the system as well as within the system. Additionally, known techniques were not capable of providing close and careful control of the eluant feed rates and concentrations. Thus, the art employed eluants having, to the extent possible, a pH and complexing agent concentration which was optimized in terms of the separation and concentration of rare earths in the recovered fractions and made no provision for varying the nature of the eluant to obtain a more efficient fractionation.

Not surprisingly, current ion exchange techniques for fractionating rare earth metal mixtures have been limited generally to those instances where only a small quantity of a very valuable rare earth is needed.

3

EP 0 335 538 A2

## SUMMARY AND OBJECTS OF THE INVENTION

In view of the foregoing limitations and shortcomings of prior art processes for fractionating rare earth metal mixtures as well as other disadvantages not specifically mentioned above, it should be apparent that there exists a need in the art for a continuous method for fractionating a mixture of rare earth metals which can simultaneously achieve both high product concentrations and a high degree of resolution among the various fractions. It is, therefore, a primary objective of the present invention to fulfill that need by providing a continuous method for fractionating a mixture of rare earth metals by ion exchange in stages using an alpha-hydroxy acid eluant of progressively increasing concentration.

It is a further object of the present invention to provide a method for fractionating a mixture of rare earth metals which is readily adaptable to changes in the composition of the feed stream and to changes in the nature of the product recovered.

Yet another object of the present invention is to provide a process for fractionating a mixture of rare earth metals which enables close control of the volume and concentration of the eluant contacted with the rare earth loaded resin at any given point in time.

The present inventors have surprisingly found that complexing agents such as alpha-hydroxy acids, which are more soluble in water then citric acid or EDTA, can be employed in a continuous process despite the rapid response time of the system, which had previously limited the usefulness of such alpha hydroxy acids.

In a first aspect, the present invention relates to a process for fractionating rare earth metals comprising:

(i) contacting a leach liquor including rare earth elements with a cationic exchange resin and loading the resin with the elements;

(ii) contacting the resin, loaded with the rare earth elements, in stages with an eluant including progressively increasing concentrations of an alpha-hydroxy acid and eluting rare earth metal fractions having progressively lighter rare earth elements therein.

In a preferred aspect, the present invention relates to a process for fractionating rare earths further including:

(iii) directing each of said rare earth metal fractions to separate cationic exchange resin beds and partially loading each of said beds with the rare earth included in the fractions directed to said beds; and

(iv) contacting the cationic exchange resin beds, partially loaded with rare earth elements, in stages with an eluant including progressively increasing concentrations of alphahydroxy acid, having a pH high enough to maintain said acid as a dissociated species but low enough not to exceed the solubility products of the rare earths, and eluting additional rare earth metal fractions.

Preferably, the processes described above are carried out in an Advanced Separation Device (hereinafter referred to as the ASD) which is a multi-chambered ion exchange device enabling the process to be carried out continuously, efficiently, and with a high degree of control.

With the foregoing and other objects, advantages, and features of the invention that will become apparent hereinafter, the nature of the invention may be more clearly understood by reference to the following detailed description of the invention, the appended claims, and to the attached drawings.

## BRIEF DESCRIPTION OF THE DRAWINGS

Figure 1 is a flow diagram illustrating the overall process of the present invention;

Figure 2 is a schematic illustration of the process for partially fractionating a rare earth metal mixture;

Figure 3 is a schematic illustration of a single level process for fractionating a rare earth metal mixture using the ASD;

Figure 4 is a flow diagram illustrating a four level process for fractionating a rare earth metal mixture; and

Figure 5 is a schematic illustration of a primary resin bed and post-treatment resin bed.

## DETAILED DESCRIPTION OF PREFERRED EMBODIMENTS

4

The present process is applicable to fractionation of rare earth metal mixtures.

Included within the definition of "rare earths" are the elements falling between lanthanum (atomic number 57) and lutecium (atomic number 72), inclusive. Additionally, yttrium (atomic number 39) which is nearly identical in its properties with the lanthanides and which is typically found in natural ore deposits together with the lanthanides is typically included within the definition of rare earths.

In obtaining individual pure rare earth metals from an ore including a mixture of such rare earth metals, the following operations are typically performed:

1) dissolving or leaching of the rare earth ore;

2) fractionating a mixture of rare earth metals by ion exchange using an eluant including a complexing agent;

3) reconcentrating rare earths contained in the recovered fractions;

4) recovering product;

5) treating and recycling eluant;

6) treating and disposing of waste.

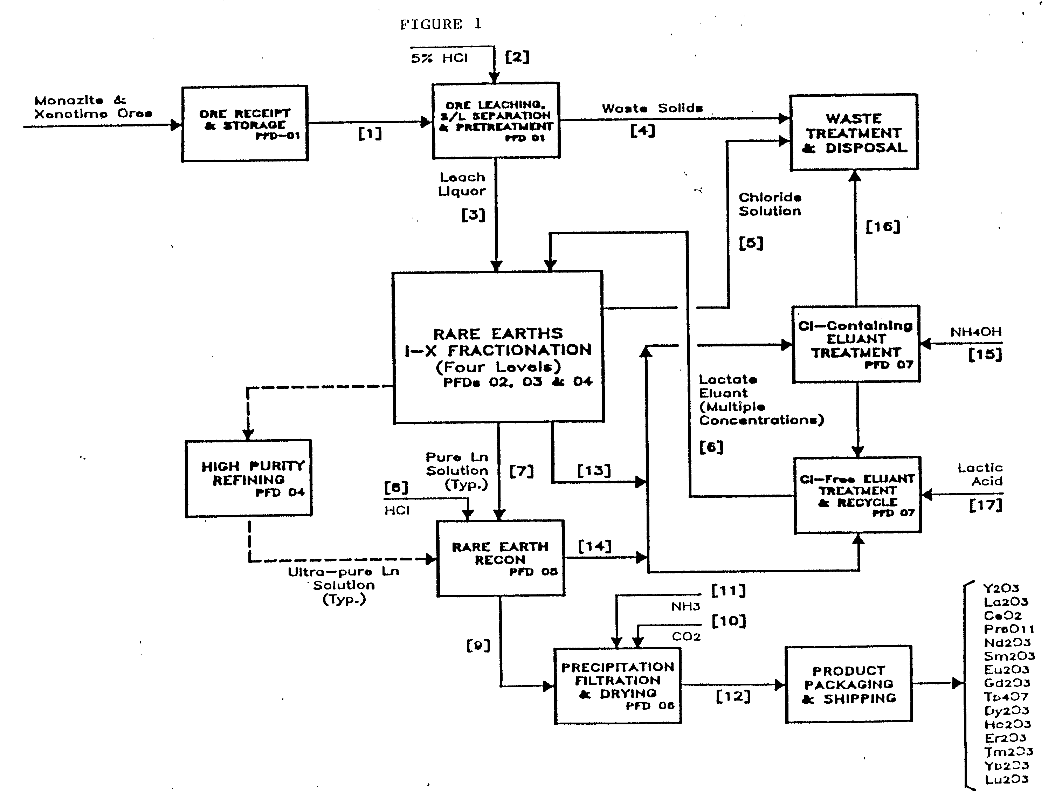

The overall process is illustrated in Figure 1.

## 1. Dissolving or Leaching of the Rare Earth Ore:

Although not so limited, the technique of the present invention is particularly applicable to the purification of multi-component solutions such as those arising from the leaching of primary rare earth-containing ores such as monazite, xenotime, or bastnaesite. The ore is leached according to techniques well known to those in the art such as by reacting the ore with weak hydrochloric acid to form a leach slurry. Such slurry is then filtered to yield a leach liquor filtrate including a mixture of rare earth elements.

## 2. Fractionating a Mixture of Rare Earth Metals by Ion Exchange Using an Eluant Including a Complexing Agent

According to the present invention, the leach liquor including the rare earth metals may be either partially fractionated into two or more fractions including rare earth metal mixtures of higher separation resolution than the initial mixture or, alternatively, the mixture may be fractioned to completion into the individual rare earth elements.

Both of the above embodiments are preferably carried out in the ion exchange device described in U.S. Patent No. 4,522,726. Such device includes a plurality of chambers which rotate in a circular path and which are in periodic fluid communication with a plurality of fixed feed ports at one end of the chambers and a plurality of fixed discharge ports at the opposite end of the chambers. The rare earth metal mixture is fed into one or more of the fixed feed ports and then delivered to the resin in the rotating chamber corresponding to such feed port at that given point in time. Eluant is fed into one or more of the other fixed feed ports for delivery to the rotating chambers corresponding to such eluant feed ports at any given point in time, the resin in the chambers having been loaded with the rare earth metals in the previous step. The reactions which occur are as follows:

I. (Loading) $LnCl3 + 3R\text{-}NH_4 \rightleftharpoons R_3\text{-}Ln + 3NH_4CL$

II. (Elution) $R_3Ln + 3NH_4 + \rightleftharpoons 3R - NH_4 + Ln^{3+}$

III. (Complexing) $LN^{3+} + nLac^- \rightleftharpoons Ln(Lac)_n^{3-n}$

The first reaction is employed in the adsorption of the $Ln^{3+}$ ions from the crude leach liquor onto the cationic exchange resin. The cationic exchange resin is preferably in its ammoniated form although persons skilled in the art will appreciate that other cationic forms are possible. Preferably, the resin is equilibrated with the leach liquor such that the high strength rare earth solution minimizes the loading onto the resin of any extraneous cations that would compromise the ability of the operation to achieve the ultra-high purity product specifications.

Any of the conventional cationic exchange resins employed in the art to fractionate rare earth metal mixtures may be employed in the present process. An exemplary resin is Dowex 50x. As persons skilled in the art are well aware, the size can be chosen depending on the nature of the product desired. Typically, a resin ranging in size from about 50 to 400 mesh will be employed.

The loaded resin is sequentially eluted with an alphahydroxy acid and preferably, with lactic acid, glycolic acid or alpha HIB, in a stepwise fashion, i.e., by gradient elution. The alpha-hydroxy acid utilized must have a pH high enough to maintain the acid as a dissociated species but low enough so as not to exceed the solubility products of the various rare earths being fractionated. Typically, ammonia or ammonium hydroxide is employed to provide the proper pH although other sources of alkalinity may also be suitable employed. Although the specific pH range will vary depending on the nature of the rare earth mixture, typically a pH ranging between about 2 and about 5, and preferably between about 4 and 5 is suitable. Reaction II, which is the reverse of Reaction I, occurs during the elution and thus, after the elution is complete the resin is in the ammonium form since the resin will have equilibrated itself with pH 5 ammoniated lactic acid.

The rare earth metals, fractionated into alpha-hydroxy acid solutions (eluates) are then routed to the various chromatography separation operations (levels). The separation technique is that known as "displacement/development" chromatography wherein the various species form a compact band in the resin bed. Reaction III is the chemical basis which permits the displacement/development chromatography to occur. Thus, a rare earth loaded resin that is contacted with rare earth free lactate solution equilibrates according to the reactions II and III and the tripositive form of the rare earth cation present in the lactate free solution is strongly attracted to the resin sites whereas the rare earth complexes which form in the lactate solution are less positive species and have a decreased affinity for the resin. This moderating influence of the complexing agent and, more particularly, the alteration of the affinity of each rare earth for the resin and the deviation from unity of the relative affinities of the various rare earth combinations, allows the chromatographic separation to take place.

As a band of rare earth elements travels down the bed of ion exchange material, development of discrete, individual layers of rare earths are formed within the band through the interaction of the separating agent with the lanthanides in a dynamic process of ion exchange and complex formation.

The layering order is determined by the relative strengths of the lactate complexes of the individual rare earths. The greater the formation constants, the more strongly a given rare earth complexes for available lactate and the faster it will travel through the resin band. The band itself establishes a characteristic length that is a function of several variable namely, the content of the rare earth feed mix, the strength of the free lactate anion, the elution flow rate and the elution temperature.

At the leading edge of the band, the rare earth cations are immediately absorbed onto the rare earth-free resin sites and more $Ln^{3+}$ ions are produced as Reaction III is driven to the left. In this manner, the rare earths effectively displace the retaining ion ($NH_4^+$) since they have a much higher affinity for the resin compared to the ammonium ion.

At the trailing edge, where there is a high concentration of free lactate (new eluant) the $Ln^{3+}$ ions immediately complex causing the Reaction II to go to the right. The rare earths are thus displaced from the resin by the competing ammonium cation, become complexed with the lactate anion, and then flow into the band portion of bed. The length of travel required to develop the band to its equilibrated state is not easily predicted and is usually determined experimentally. This variable also depends on the severity of the separation, i.e., the number of elements and their relative concentrations in the mixed feed. Typically, a band should travel at least twice, and possibly as much as four times, its own length before equilibrium has been established.

There will always be a portion of the band depth at the interface between individual layers that contains a mixture of two elements. Reaction kinetics as well as the effects of diffusion and axial dispersion are responsible for such mixing of layers at their interfaces. If this mixed interface depth is greater than the layer depth occupied by a specific element, than that element will not be collected in the totally pure state at any recovery level in the state of fractionation. Nonetheless, the enriched fraction of the element which is collected can be reprocessed in a subsequent stage from which the element will be at least partially recovered in its pure state.

The "level" concept, involving treatment of the fractions in additional ion exchange chambers, increases the flexibility of the system since fractions of varying concentration and resolution can be accommodated. The higher the purity and recovery requirements, typically the greater the number of stages (levels) of separation will be required. The number of levels required also depends on factors such as the depth of the beds. Thus, shallow beds can speed up the processing time but, because they provide a lower degree of separation, they will require more levels.

The rare earth fractions produced in the first stage of elution will exist as partially complexed moieties at pH levels of about 5. Prior to loading such rare earths onto another column of the ion exchange resin, such rare earth cations must be reconverted to their trivalent state. This is achieved by acidifying the solution in order to neutralize the complexing effect of the lactate anion. Such proceeds according to the reaction:

(IV) $HLac \rightleftharpoons H^+ + Lac^-$

The above weak acid dissociation reaction is totally suppressed at a pH of 2 which eliminates presence of lactate ions in the aqueous solution.

After adjusting the pH to about 2 via acid addition to the rare earth metal complexes, the tripositive rare earth cations are loaded onto another bed of the cation exchange resin. The elution of the lanthanides is accomplished by reversing reaction I and strong (4M) ammonium chloride is employed to strip the purified metals from the resin to produce a concentrated rare earth metal solution. High strength ammonium chloride is required to provide the mass action necessary overcome the higher affinity of the rare earth metals for the resin sites. The reaction also provides the closed lactic acid system with a majority of its ammonia requirements.

The fractionation process may be carried out to completion, i.e., to the point where each of the individual rare earths is separated from the other rare earths. Alternatively, the process may be carried out to provide a "rough cut" wherein there is only partial fractionation of the rare earths. Additionally, the process can be carried out in one or more levels, i.e., the eluate fractions produced after a first exchange may be subjected to yet another "level" of exchange to provide further fractionation.

Preparation of rough-cut fractions by the partial fractionation process

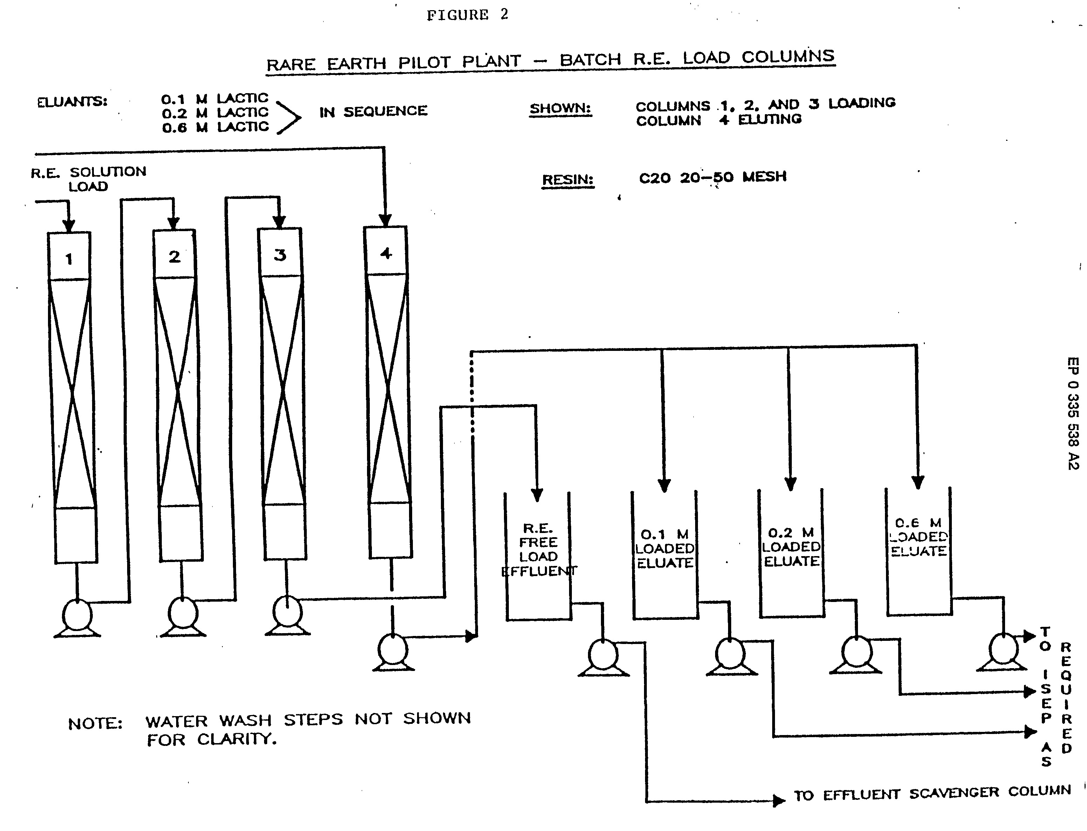

As illustrated in Fig. 2, rare earth containing solution is passed through the first of three columns containing C-20 resin, operating in a series fashion, so that Column No. 1 becomes fully loaded with respect to the rare earths.

After some preset period of time, Column No. 1 is removed from service and an additional column, i.e., Column No. 4, is brought into service.

Column No. 2 then becomes the lead column and the solution flows (in series) through Column Nos. 2, 3 and 4.

When Column 2 is loaded, it is removed from service and Column No. 1, which has been regenerated using a technique to be described, is brought into service so that the series flow is now 3, 4 and 1.

This procedure continues for as many cycles as required.

A loaded column, when removed from the sequence then enters a regeneration phase.

Considering Column 4, the following sequence is employed. The column is first water washed to remove entrained leach liquor. Specific quantities of varying strength lactic acids are then passed by the resin in the following sequence: 0.1 molar, 0.2 molar and 0.6 molar, the pH of the eluants having been adjusted by the addition of ammonia. The eluate from each of the lactic acid treatments is kept in separate vessels for subsequent treatment. The regenerated resin is water washed to remove entrained lactic acid and then readied for return to service.

Pilot plant work was conducted using this technique and employing a batch column system similar to that previously described.

Pilot Plant Tests

The batch column system consisted of five, 48" long x 3" internal diameter translucent PVC columns. Each column was loaded with C20 resin manufactured Rohm & Haas (20 - 50 Mesh) to a depth of twenty inches - (2.3 liters resin/column; or 1 bed volume).

Facilities existed for operating the columns as single units or in series. For loading purposes the resin was first converted to the $NH_4^+$ form using 2M $NH_4Cl$. This conditioning process was performed by pumping 2M $NH_4Cl$ through a series of columns at a rate of 450 ml/minute (2.5 GPM/ft$^2$). After conditioning, the columns were washed free of chloride ion by pumping deionized water through the columns at a rate of 180 ml/minute (1 GPM/ft$^2$).

The loading procedure developed involved pumping rare earth load solution (obtained from the dissolution step) through four columns in series at a rate of 370 ml/minute (2 GPM/ft$^2$). Loading of the first column in the series was deemed complete when spot tests showed the presence of lanthanide in the effluent from the next to last column.

At this time the loaded column was removed and a previously conditioned column placed at the end of the column system. Loading was continued as required until effluent from the next to last column in the

7

EP 0 335 538 A2

system again tested positive for rare earths. Loaded columns were then washed with de-ionized water before elution.

Washed, loaded, columns were then individually eluted with 0.1, 0.2, and 0.6M lactic acid at pH 5.0.

An elution rate of 1 GPM/ft$^2$ was maintained throughout the elution sequence. Elution was complete when spot tests for rare earth ions in 0.6M eluate showed no trace of rare earth.

Batch load column eluates were collected separately and classified as follows:

| Load Effluent: | Rare earth-free loaded solution effluent. |
|---|---|
| Load Wash: | Rare earth-containing solution derived from deionized water washing of loaded columns. |
| 0.1M Eluate: | |
| 0.2M Eluate: | Eluate solutions containing rare earths. |
| 0.6M Eluate: | |
| End Wash: | Water wash at end of 0.6M elution. |

Examination of the composition and recovery of each element into the 0.1M lactic acid demonstrates the success of the technique. For instance, the data below shows that 57% of the total neodymium mass on the loaded resin was recovered with only 21% of the lanthanum and 35% of the cerium.

| WEIGHT PERCENTAGE DISTRIBUTIONS between FRACTIONS | | | | | |
|---|---|---|---|---|---|
| ELUATE FRACTION | Individual Elements | | | | ALL R.E.s |
| | La | Ce | Pr | Nd | |
| 0.1M Lactic | 21 | 35 | 48 | 57 | 34 |
| 0.2M Lactic | 26 | 40 | 42 | 38 | 35 |
| 0.6M Lactic | 53 | 26 | 10 | 5 | 31 |

| FRACTION PURITIES(%) and CONCENTRATIONS(mg/l) | | | | | | | | | | |
|---|---|---|---|---|---|---|---|---|---|---|
| SOLUTION FRACTION | Lanthanum | | Cerium | | Praseodymium | | Neodymium | | Total R.E. | |
| | % | mg/l | % | mg/l | % | mg/l | % | mg/l | vol(l) | mg/l |
| Feed | 33.4 | 29500 | 49.6 | 43800 | 4.7 | 4160 | 12.2 | 10800 | 21.6 | 88000 |
| 0.1M Lactic | 19.8 | 238 | 52.1 | 626 | 6.2 | 74 | 22.0 | 264 | 324.0 | 1204 |
| 0.2M Lactic | 23.9 | 425 | 57.1 | 1016 | 5.2 | 92 | 13.9 | 247 | 228.0 | 1780 |
| 0.6M Lactic | 55.1 | 1098 | 41.4 | 825 | 1.4 | 29 | 2.1 | 42 | 181.0 | 1994 |

As seen, the basic fractionation concept is workable and can be utilized to provide partial separation of mixtures containing a number of rare earth materials. While the illustration is based on fixed-bed ion exchange, the use of such systems, with multiple elutions becomes complicated, thus employment of a continuous ion exchange system such as that described in U.S. Patent No. 4,522,726 is the preferred method for operation. With this technique partial fractionations can be achieved on a continuous basis utilizing multiple eluants.

Continuous Gradient Elution in a Single Level

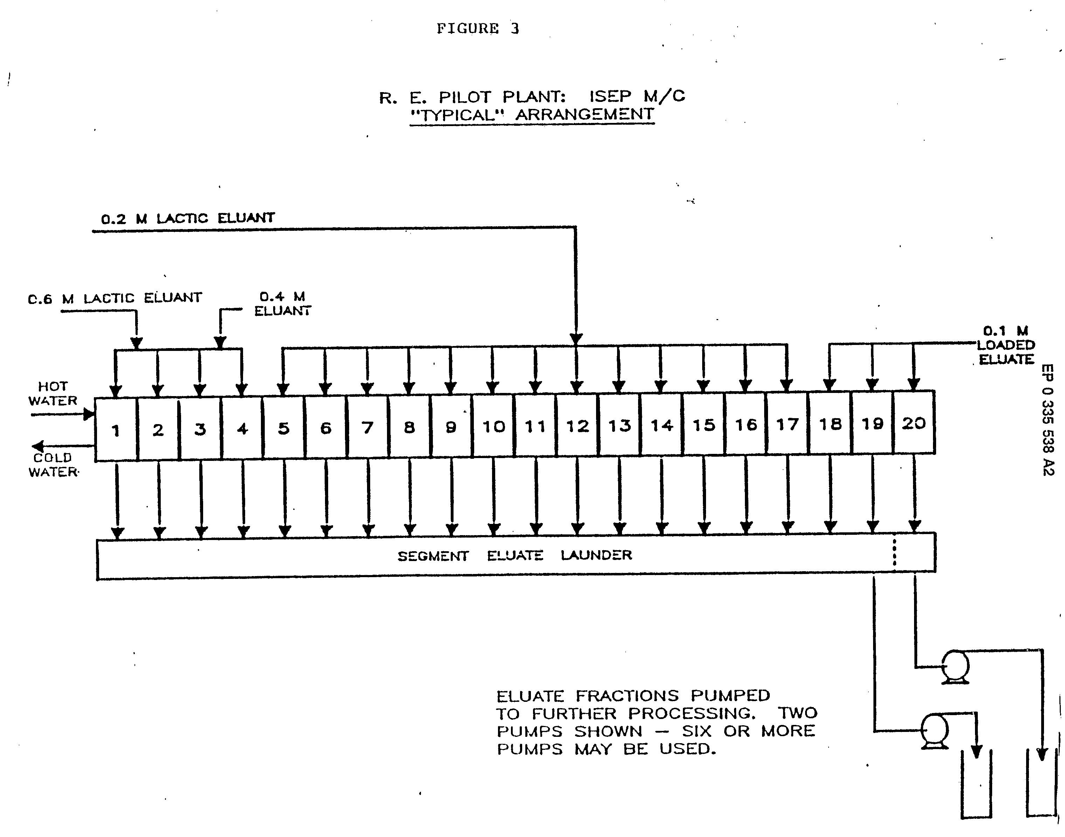

A rare earth metal mixture can be fractionated in an ASD. As illustrated in Fig. 3, the ASD has twenty resin filled chambers rotating in periodic fluid communication with fixed feed and discharge ports, denoted by the arrows.

The first step in the process is to load rare earths onto the resin (segments 18, 19 and 20 in Figure 3). Depleted solution is discharged for recycle.

The rare earth loaded resin moves from segment 17 though segment 5 and is contacted with 0.2 molar lactic acid. The low strength lactic acid begins to selectively elute the heavier rare earth materials.

As the resin moves from segment 5 into segment 4, the eluant strength is changed and increased to 0.4 molar; which begins to remove some of the light rare earth materials. Finally, as the resin moves through segments 2 and 1, a 0.6 molar lactic acid is utilized to strip any residual rare earths from the resin. The resin then returns to segment 20 for reloading with fresh rare earth containing weak eluate from a previous process step or other source. The lactic acid eluants are adjusted with ammonium to a pH of about 5.0.

The discharge fluid from the various segments, or zones, is collected in the trough arrangement and various "cuts" are transferred to intermediate storage or systems for rare earths recovery.

Experimental Results

Pilot plant testing was done utilizing the gradient lactic acid elution concept with the continuous ion exchange system illustrated in Fig. 3. Rare earth containing solution (0.1M loaded eluate) was pumped to the top inlet valve of a modified ASD. Heated lactic acid eluants were pumped to the inlet valve and distributed to the columns as required.

Thirty 1" diameter ion exchange columns were each filled to a depth of 8" with 103 ml. of Dowex 50Wx8 strong acid cationic resin. The resin particle size was 100-200 mesh. The columns were water jacketed. Heated, de-ionized water was distributed into an annular moving launder which fed each jacket.

The water jacket temperature was controlled between ambient temperature and 140° F.

Heated eluants were pumped to the upper valve and flowed by gravity through the columns. Eluates were discharged into a fixed, annular, eluant collection launder which was divided into 120 compartments. Eluates collected in each compartment could be routed individually for further processing. Alternatively, compartments could be connected into groups (bulked) and combined eluates stored for subsequent treatment.

Operating in the desired mode, the machine permits a wide range of process conditions to be examined including (1) extending or curtailing elution time by increasing or decreasing rotation time, (2) varying feed solution load rate, (3) varying elution rates and concentrations from zone to zone, (4) changing bed depth, or resin type, (5) varying eluant/elution temperatures, and (6) varying fraction volumes.

The device was run at a rate of between 0.6 and 10 hrs/revolution.

The results of the run in the ASD are as follows:

| RARE EARTH PRODUCT FRACTION PURITIES | | | | | | |
|---|---|---|---|---|---|---|
| LAUNDER SEGMENT | % La | % Ce | % Pr | % Nd | Vol (l) | TOTAL RE mg/l |
| 10-14 | 0.0 | 0.0 | 0.0 | 100.0 | 14.0 | 75 |
| 15-21 | 0.0 | 0.0 | 12.5 | 87.5 | 35.5 | 240 |
| 22-41 | 0.0 | 64.4 | 22.2 | 13.3 | 9.0 | 225 |
| 42-56 | 0.0 | 96.7 | 3.3 | 0.0 | 12.0 | 895 |
| 57-75 | 30.5 | 69.5 | 0.0 | 0.0 | 7.5 | 1675 |
| 76-99 | 100.0 | 0.0 | 0.0 | 0.0 | 12.5 | 490 |

Tabulated below is a summary of the test products from a continuous 76 hour run in the ASD.

| FRACTION PURITIES(%) and ELEMENT CONCENTRATIONS (mg/l) | | | | | | | | | |
|---|---|---|---|---|---|---|---|---|---|
| STREAM NAME | Lanthanum | | Cerium | | Praseodymium | | Neodymium | | Total RE |
| | % | mg/l | % | mg/l | % | mg/l | % | mg/l | mg/l |
| Feed | 18.8 | 228 | 52.5 | 634 | 6.4 | 77 | 22.7 | 269 | 1208 |
| Nd rich | 0.0 | 0 | 0.0 | 0 | 2.6 | 5 | 97.4 | 177 | 182 |
| Nd/Pr/Ce | 0.0 | 0 | 17.7 | 43 | 23.5 | 57 | 58.8 | 143 | 243 |
| Pr/Ce | 0.0 | 0 | 53.2 | 130 | 24.9 | 61 | 21.9 | 54 | 245 |
| Ce rich | 0.0 | 0 | 90.9 | 1161 | 6.3 | 80 | 2.8 | 36 | 1277 |
| Ce/La | 10.9 | 161 | 89.1 | 1310 | 0.0 | 0 | 0.0 | 0 | 1471 |
| La rich | 77.5 | 576 | 22.5 | 167 | 0.0 | 0 | 0.0 | 0 | 743 |

| RARE EARTH PERCENTAGE WEIGHT DISTRIBUTIONS between FRACTIONS | | | | | | | | | |
|---|---|---|---|---|---|---|---|---|---|
| STREAM NAME | Lanthanum | Cerium | Praseodymium | Neodymium | Total RE | | | | |
| Nd rich | 0 | 0 | 2 | 43 | 4 | | | | |
| Nd/Pr/Ce | 0 | 2 | 28 | 35 | 6 | | | | |
| Pr/Ce | 0 | 5 | 30 | 13 | 6 | | | | |
| Ce Rich | 0 | 41 | 39 | 9 | 31 | | | | |
| Ce/La | 22 | 47 | 0 | 0 | 35 | | | | |
| La rich | 78 | 6 | 0 | 0 | 18 | | | | |

The above data illustrates the overall result of continuous, gradient lactic acid fractionation. For instance, the recovery of neodymium was 43% at > 97% purity in a single fractionation step, employing feed containing 22% neodymium.

The gradual increase in lactic acid concentration clearly provides for superior separation performance and results in a more straightforward method to fractionate rare earths while still maintaining relatively high rare earth concentrations in the resulting eluates. Single strength lactic acid can perform fractionation but at the cost of dilution.

Four Level Process for Fractionating a Mixture of Rare Earth Metals

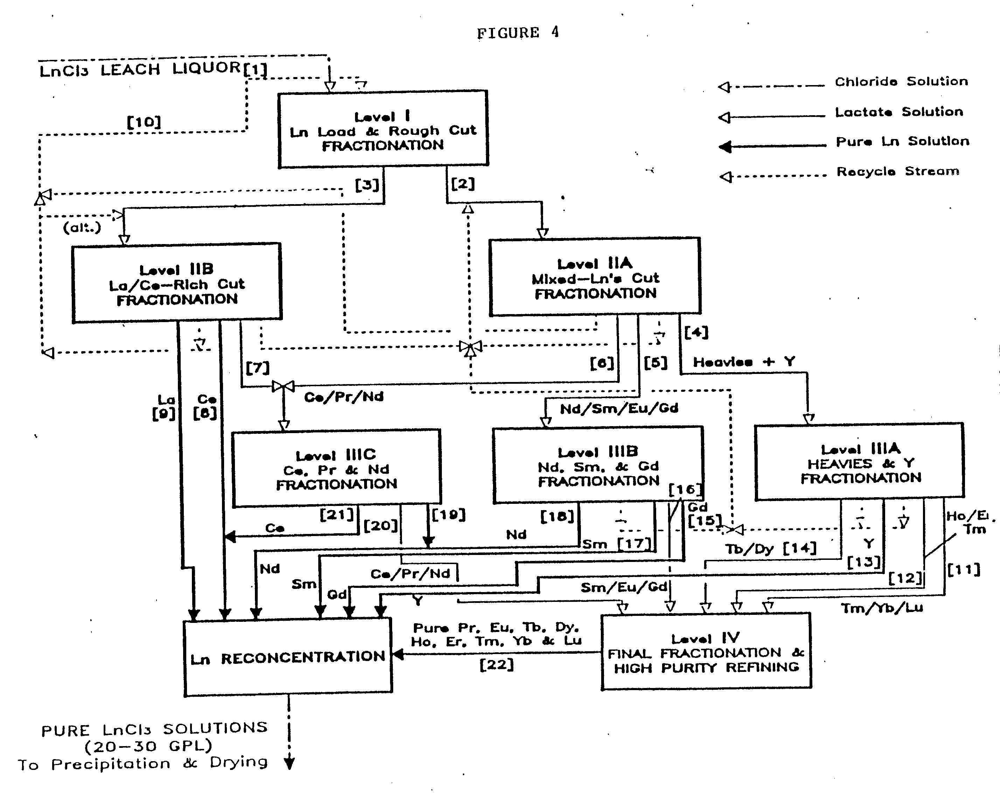

A four level process for fractionating a mixture of rare earth metals is now described. First, the heavier rare earths are separated from the lighter ones. Subsequently, the rare earths are separated from one another. A typical four-level rare earth fractionation process is depicted in Figure 4. It is contemplated that the ASD will be employed although other ion exchange devices may likewise be employed.

The steps involved in level I include (1) loading of the rare earth metals onto the cation resin, (2) removal of the rare earth metal depleted chloride leach solution by resin rinsing, and (3) elution of the rare earth metals into two "rough cuts", one of which is enriched with respect to the heavier elements and the other of which is enriched with respect to the lighter materials, using an ammonium lactate solution at pH 5.

The Level I production is carried out in two 30 foot diameter ASDS operated in parallel so as to maintain ASD design uniformity and minimize disruption of operations. Each ASD has 60 cylindrical cells containing both a primary and a posttreatment resin bed. For purposes of clarity, only one ASD is illustrated in Figure 4.

After loading the exchange resin with ammonium ions by conventional techniques, a leach liquor is fed into the first port in the loading zone at a maximum specific flow rate of 3.0 GPM/ft2. The trivalent rare earths exchange for ammonium ions on the resin sites. Although not shown in Fig. 4, after passing through the resin bed, liquor is collected and fed, countercurrently, into the second load port to exchange the remainder of rare earth metals onto the resin. The ammonium chloride effluent from the second pass, depleted of rare earth metals, is transferred to the waste treatment area. Resin utilization is approximately 95%, i.e., 95% of the available resin sites have been used in the exchange. During the loading process, only the primary resin bed in each ASD cell is used.

The loaded resin enters a three-pass countercurrent rinse zone (not shown) where water is used to wash chlorides from the resin. Once used, this water is transferred from a pump tank for use as wash and dilution water in the ore leaching area.

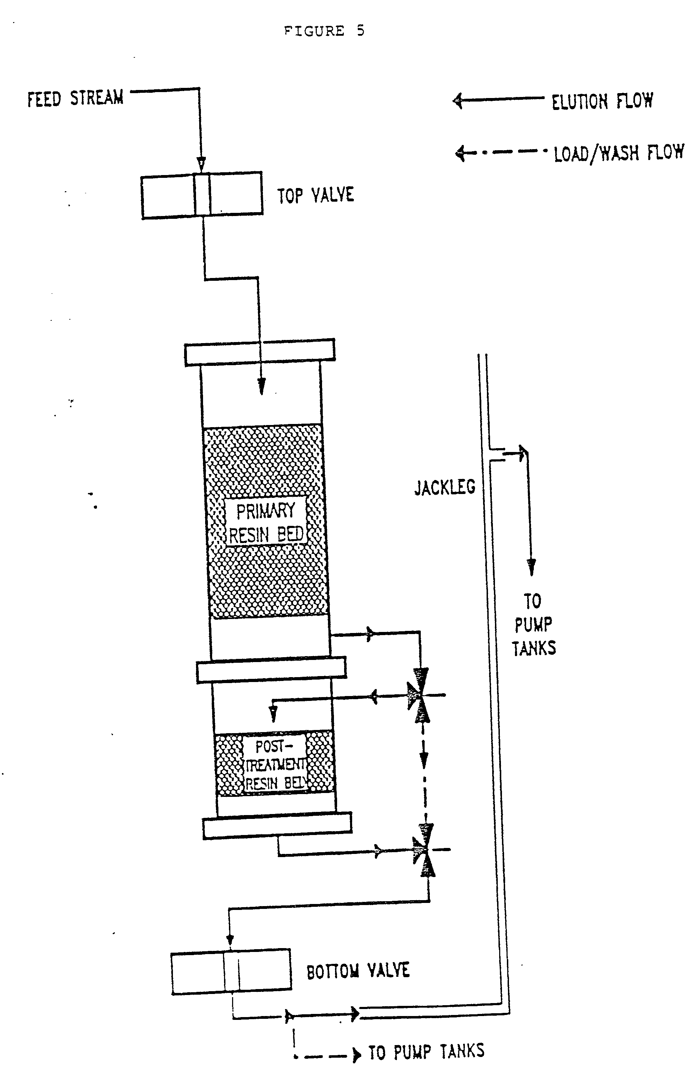

A 0.1 M lactic acid solution, adjusted with ammonium to a pH of 5.0, is fed to the first elution zone, in a crossflow manner, at a specific flow rate of approximately 1.0 GPM/ft$^2$. As the resin chambers enter the elution zone, the post-treatment resin bed, unused in the upstream zones, is placed in service and jacklegs are used to flood both resin beds. The cell and jackleg configuration is depicted in Figure 5. The ammonium lactate elutes the heavier lanthanides at a faster rate then it elutes the lighter ones resulting in initial eluate fractions that are enriched in the heavier rare earth elements.

The initial eluate leaves the primary resin bed and passes through the clean, post-treatment bed (virgin bed) where the elution process is reversed to some degree. The resin in this bed will load with rare earths because the concentration gradient is reversed. The resin is more selective for the lighter species, and thus, the resin will pick up most of the La, Ce, and Pr ions present in the initial eluate from the primary bed. This process is referred to as "post-treatment" and its function is to enhance and further enrich the eluates with respect to the heavy/light elements. The process is not intended to achieve a high degree of fractionation between individual rare earths, but rather, to enhance the split between the heavy and light fractions in the first eluate cut.

As the eluant passes through the resin, the eluate composition changes, become lower in heavies and higher in light species concentration. A predetermined volume of 0.1 M eluant, per volume of resin, is added to effect an optimum split of rare earths into the first cut, referred to as eluate cut I-1. After eluate cut I-1 is collected, the remainder of the eluate becomes the second eluate cut, I-2, and the eluant strength is increased to 0.6 M for complete elution with minimum volume. All of the rare earths in the primary and post-treatment resin beds are stripped, leaving the resin sites occupied with ammonium ions. As the resin exits the second elution zone, both resin beds are drained of eluate, and the second bed is returned to the bypass mode. Eluate products I-1 and I-2 containing about 0.6-3.0 GPL rare earths, are pumped to surge tanks for subsequent use in Level II.

The rare earth-free resin next enters a recycle load zone where mixed rare earth eluate cuts, recycled from the Level II ASDs, are passed through the resin at a low specific flow rate (2.0 GPM/ft$^2$) to recover the rare earths. Level I recycle eluate has a rare earth concentration of over 1 GPL (grams per liter), and about one-fifth of the rare earth production is recycled through this zone. The rare earth-free eluate from this load zone drains into a pump tank and it is sent to an eluant treatment area. Thus, the reason for two load zones is simply to maintain as much isolation between the lactate separation circuit solutions and the chloride circuits on either side of the ion exchange interfaces represented by Level I and the reconcentration operations.

Partially loaded resin is drained of lactate solution and enters a three-pass, countercurrent wash zone where permeate water from the eluant reverse osmosis system is used to recover entrained lactates from the resin. This water is transferred from a pump tank to the eluant treatment area. Lactate conversation is of prime importance to the process economics and is stressed throughout the process design.

There are two Level II fractionation processes. Eluate cut I-1 is fed to Level IIA and cut I-2 is fed to Level IIB. Three ASDs are used in Level IIA in order to maintain ASD uniformity. Only one ASD is required for Level IIB due to lower feed rates. The ASDs are 30' in diameter.

Eluate cut I-1 is mixed with recycle eluate streams from downstream processes, and the pH is lowered to about 2.0 with concentrated HCl to prevent leakage of tripositive rare earth ions by decomplexing any rare earth $(Lac)_n^{n-3}$ species. This technique is of prime importance in ensuring that the rare earths occupy a compact band at the top of the chamber resin beds. The stream is fed to the three Level IIA ASDs at a combined rate of 580 GPM. For purposes of clarity, only one ASD process is shown on the diagram. The rare earth-free ammonium lactate effluent flows to the pump tank for transfer to the eluant treatment area. By design, the strong acid cation resin is loaded to about 25% of the bed's total ion exchange capacity. Loaded resin is then contacted with 0.1 M ammonium lactate eluant in the "band reflux zone." Here, the rare earth-loaded band at the top of the bed stretches and travels downward under the influence of a series of ion exchanges and complexing reaction equilibrium. The net result is that the lighter rare earths tend to remain in the upper part of the band within the resin bed, while the heavier species concentrate to the bottom of the band.

Three different eluant streams of 0.1 M, 0.2M, and 0.6 M ammonium lactate are fed to respective tanks located above the ASD elution zones. Eluant flows through the valve ports to the resin cells at a specific rate of about 1.0GPM/ft$^2$. Resin is contacted with the weakest eluant first.

The volume of each eluant used per volume of resin treated is determined by specific elution characteristics. Given a defined loaded resin composition, the initial metal containing eluates will contain only the heavier portion of the species on the resin. As more eluate exits the resin beds, .its composition continually changes as the first species eluant becomes depleted and the species that are more tightly held in the resin phase begin to appear in the eluate. As the elution progresses, the lower atomic weight species become more difficult to remove, and the eluate rare earth concentration lessens. To maintain reasonable rare earth concentrations while simultaneously retaining selective elution characteristics, the lactate eluant strength is increased in a stepwise or "gradient" fashion until finally, a 0.6 M eluant is used to remove the last of the species.

In Level IIA, there are fifteen feed ports for three eluants. The number of ports used for each eluant is in proportion to its flow rate relative to the overall eluant flow rate. If the ratio of the three eluant volumes is changed, the feed port allocation can also be modified.

Eluant cut IIA-I contains only heavier rare earth elements namely, Tb, Dy, Ho, Er, Tm, Yb, Lu and Y. It is a large stream (290 GPM) due primarily to the large amount Y on the loaded resin (comprising over 50% of the total loaded rare earths). This stream is surged for feed to Level IIIA. The second cut, IIA-2, is comprised primarily of Y, Gd, Eu and Sm. This is considered a "mixed" stream, and as such, it is routed to the level IIA recycle tank. The third cut IIA-3, consisting of Gd, Eu, Sm, and Nd is surged for feed to level IIIB. Eluate cut IIA-4 consists of a mixture of Nd, Pr and Ce which become feed stock for a Level IIIC fractionation step. Finally, a fifth cut IIA-5 is a small stream of La and Ce species which is routed to the Level I recycle tank. All of the rare earths are eluted from the resin into the five cuts. A maximum of six individual cuts can be isolated from this level, if required.

The Level IIB ASD process is operated in a manner similar to that used in Level IIA. The feed stream, however, (eluate cut 12) contains no elements heavier than Tb, and the concentration of rare earths is nearly four times greater than that in cut I-1. In addition, no recycle stream is blended into the feed.

Only five of the six available eluate cuts are required in the Level IIB fractionation. Eluate cut IIB-I consisting of Gd, Eu, Sm and Nd is recycled to Level II-A via the surge tanks since these species will be separated in Level IIIB via eluate cut IIA3. Cut IIB-2 contains Nd, Pr and Ce which is combined with the eluate cut IIA-4 in a surge tank for feed to Level IIIC. Pure cerium is produced from eluate cut IIB-3 because of its relatively high concentration in the feed (55% of total rare earths). Cut IIB-4 is a mixture of Ce and La which is recycled to Level I via a surge tank. Pure lanthanum is obtained in the fifth cut since the concentration is relatively high (28% of total rare earths in the feed) and it is the last species eluted from the resin. The pure cuts IIB-3 and IIB-5 are transferred to their respective surge tanks for feed to the rare earth reconcentration area.

A summary of the Level II eluate cuts is as follows:

IIA-1 Heavies and Yttrium
IIA-2 Heavies, Yttrium and Middles
IIA-3 Neodymium and Middles (Gd, Eu and Sm)
IIA-4 Cerium, Praseodymium and Neodymium
IIA-5 Lanthanum and Cerium
IIB-1 Neodymium and Middles (Gd,Eu and Sm)
IIB-2 Cerium, Praseodymium, Neodymium
IIB-3 Pure Cerium
IIB-4 Lanthanum and Cerium
IIB-5 Pure Lanthanum

Three ASD systems were used in the Level III fractionation process. In this level five pure rare earth species cuts are produced, as well as five mixed cut streams which are fed to the Level IV fractionation step. Three ASD systems separate Y, and heavies, "middles" (Nd through Gd) and "lights" (La through Nd), in Levels IIIA, IIIB and IIIC, respectively. The Level III ASDs are operated in the same manner as the Level II systems.

Eluate cut IIA-1, consisting of Y and heavies, is first acidified to a pH of 2.0 with HCl, then divided between two Level IIIA ASDs. For purposes of clarity, only one ASD is shown on the flow diagram. Six eluate cuts are obtained from this process with the following compositions and stream numbers:

IIIA-1 Thulium, Ytterbium, Lutetium
IIIA-2 Holmium, Erbium, Thulium
IIIA-3 Yttrium and Holmium
IIIA-4 Pure Yttrium
IIIA-5 Dysprosium and Yttrium
IIIA-6 Terbium and Dysprosium

Eluate cuts IIIA-1, IIIA-2, and IIIA-6 are surged for feed to Level IV. Cuts IIIA-3 and IIIA-5, considered mixed cuts, are recycled to level IIA. The largest cut IIIA-4 is pumped to the yttrium lactate surge tank for feed into the rare earth reconcentration area.

Eluate cut IIA-3, comprised of Nd, Sm, Eu and Gd, is acidified to a pH of 2.0 with HCl and split between two Level IIIB ASD systems. Only one ASD is shown on the flow diagram. Five eluate cuts are obtained from this process with the following compositions and stream numbers:

IIIB-I Pure Gadolinium

IIIB-2 Samarium, Europium and Gadolinium

IIIB-3 Pure Samarium

IIIB-4 Neodymium and Samarium

IIIB-5 Pure Neodymium

Eluate cut IIIB-2 is surged for feed to Level IVD. Cut IIIB-4 is considered a mixed cut that is recycled to Level IIA. Cuts IIIB-I, IIIB-3 and IIIB-5 are pumped to their respective rare earth lactate surge tanks for feed to the rare earth reconcentration area. Eluate cuts IIA-4 and IIB-2 containing Ce, Pr and Nd are combined, acidified with HCl and fed to the Level IIIC ASD. Three eluate cuts are obtained from this process with the following compositions and stream numbers:

IIIC-1 Pure Neodymium

IIIC-2 Cerium, Praseodymium and Neodymium

IIIC-3 Pure Cerium

Eluate cut IIIC-2 is surged for feed to Level IVE. Cuts IIIC-1 and IIIC-3 are pumped to the respective rare earth lactate surge tanks for feed to the rare earth reconcentration area.

Five ASDs are used in the Level IV fractionation process. The feed streams to each of the systems typically contain two or three rare earths. The mixed eluate cuts from the level IV system are recycled to the feed stream, and only two eluant strengths are used. Otherwise, the Level IV ASD systems are operated in the same manner as the Level II and III circuits. All of the rare earth bearing streams leaving Level IV are pure. The ASD systems consist of five, 16'- diameter units, each with forty-eight, 1.5'-diameter cells.

One of the Level IV systems can be used for high purity refining when needed. The mixed eluate feed stream from Level III is diverted to a large Level IV surge tank while the rare earth to be purified is processed in the ASD that is designated for that mixed eluate stream. Normally, the ASD used for this function is Level IVD because its feed stream, eluate cut IIIB-2, is the smallest of the five, and is therefore is easiest to surge.

The feed to the Level IVA ASD is eluate cut IIIA-I containing lutetium, ytterbium and thulium. Three pure cuts of Lu lactate, Yb lactate and Tm lactate are produced in this unit and surged prior to reconcentration.

Eluate cut IIIA-2 is the feed stream to Level IVB. From this level thulium lactate, erbium lactate and holmium lactate are produced and surged for subsequent reconcentration.

The Level IVC ASD receives its feed from the eluate cut IIIA -6 which contains only two species, dysprosium and terbium. Dy lactate and Tb lactate products are surged for feed to reconcentration.

The feed to the level IVD ASD is eluate cut IIIB-2, containing gadolinium, europium, and samarium. Three pure cuts of Gd lactate, Eu lactate and Sm lactate are produced in this unit. The Eu lactate is surged while the other two streams are transferred to their respective surge tanks.

Eluate cut IIIC-2 containing cerium, praseodymium, and neodymium species, is the feed stream to Level IVE. From this level, pure Ce lactate and Nd lactate are obtained and transferred to surge tanks in other areas. Pr lactate is surged in the Level IV fractionation area.

## 3. Reconcentrating Rare Earths Contained in the Recovered Fractions

The pure rare earth lactate streams are processed through reconcentration ion exchange systems, using an ammonium chloride eluant, and the rare earth concentration is increased by a factor of 25-100. Reconcentration techniques are well known to persons skilled in the art. For example, individual rare earth lactate solutions are acidified to a pH of 2 with 22% HCl and the rare earth is loaded onto a strong acid cation resin. Residual lactate is rinsed from the resin, and the rare earth is eluted from the resin with a four molar, pH 5, ammonium chloride solution. The design concentration of rare earth in the resulting eluate is typically 20-35 GPL. After elution, the resin is washed with water to remove residual chloride and returned to the load zone.

## 4. Recovering Product

All rare earth fluoride solutions produced in the reconcentration process are transferred to surge tanks in the rare earth recovery area. These stream flows are small, ranging in size from 17 ($LuCl_3$) to 5000 ($YCl_3$) gallons per day. Therefore, the recovery area is designed for $Ln_2O_3$ campaign operations.

There are four recovery trains, each containing an agitated tank precipitation circuit, vacuum belt filter and indirect-heated dryer. Each train is designed to process 2,500 pounds per day of $Ln_2O_{33}$ and campaign periods last 2-7 days, depending upon the size of the $LnCl_3$ stream and its surge capacity. Between campaigns, all process equipment in the train is thoroughly cleaned in order to prevent contamination. Such techniques are well known as are alternative recovery techniques.

## 5. Treating and Recycling Eluant

The ammonium lactate eluant treatment area consists of ASD ion exchange systems for removing chloride; reverse osmosis and evaporation systems for reconcentration; pH and molarity adjustment controls for the four different eluants; and an eluant feed distribution system to the four fractionation levels. Used, acidic lactate eluant streams (chloride bearing) from the ASD systems are routed into one of the three following supply headers based on the individual stream concentrations; weak (0.1M); medium (0.2-0.4M), and; strong (0.6M) Cl-bearing lactate.

Although only preferred embodiments are specifically illustrated and described herein, it will be appreciated that many modifications and variations of the preferred embodiments are possible without departing from the spirit and intended scope of the invention.

## Claims

1. A process for fractionating a mixture of rare earth metals by ion exchange between a leach liquor containing the rare earth metals and a cationic exchange resin, characterized bY contacting the resin, after it is loaded with the rare earth metals, with an eluant of an alpha-hydroxy acid, the resin being divided into stages and conducting the acid through successive stages in increasing concentrations of the acid, having a pH high enough to maintain the acid as a dissociated species but low enough not to exceed the solubility products of the rare earth metals, and eluting rare earth metal fractions having progressively lighter rare earth metals therein.

2. A process according to claim 1, further including:

(i) directing each of said rare earth metal fractions to separate cationic exchange resin beds and partially loading each of said beds with the rare earth metal included in the fractions directed to said beds; and

(ii) contacting the cationic exchange resin beds, partially loaded with the rare earth metals, in stages with an eluant including progressively increasing concentrations of alpha-hydroxy acid, having a pH high enough to maintain said acid as a dissociated species but low enough not to exceed the solubility products of the rare earth metals, and eluting additional rare earth metal fractions.

3. A process according to claim 2, further including repeating steps (i) and (ii) with the additional rare earth metal fractions containing two or more rare earth metals and collecting rare earth metal fractions containing only one rare earth metal.

4. A process according to any of claims 1 to 3, wherein the alpha-hydroxy acid is lactic acid, glycolic acid or alpha-HIB.

5. A process according to any of the preceding claims, wherein the pH of the alpha-hydroxy acid is adjusted with ammonia or ammonium hydroxide.

6. A process according to any of the preceding claims, wherein the pH is adjusted to between about 2 and 5, preferably to between about 4 and 5.

7. A process according to any of the preceding claims, wherein the resin is in the ammonium form.

8. A process according to any of the preceding claims, wherein the progressively increasing concentrations of the alpha-hydroxy acid range between about 0.1 M and 0.6 M.

9. A process according to any of the preceding claims, further including contacting the rare earth metal fractions with virgin cationic exchange resin to further enhance the fractionation of the rare earth metals.

10. A process according to any of claims 1 and 4 to 9, wherein the cationic exchange resin is provided in a plurality of chambers rotating about a circular path in periodic fluid communication with a plurality of fixed feed ports at one end of the chambers and fixed discharge ports at the other end of the chambers and wherein the leach liquor including the rare earth metals is fed into one or more fixed adsorption stage feed ports and the eluant including progressively increasing concentrations of the alpha-hydroxy acid is feed to one or more fixed elution stage feed ports.

11. A process according to any of claims 2 to 9, wherein the cationic exchange resin is provided in a plurality of chambers rotating about a circular path in periodic fluid communication with a plurality of fixed feed ports at one end of the chambers and fixed discharge ports at the other end of the chambers and wherein the rare earth metal fractions having progressively lighter rare earth metals therein are fed into one or more fixed adsorption stage feed ports and the eluant including progressively increasing concentrations of the alpha-hydroxy acid is fed to one or more fixed elution stage feed ports.

FIGURE 1

FIGURE 2

RARE EARTH PILOT PLANT — BATCH R.E. LOAD COLUMNS

FIGURE 3

## R. E. PILOT PLANT: ISEP M/C
### "TYPICAL" ARRANGEMENT

**0.2 M LACTIC ELUANT**

**C.6 M LACTIC ELUANT**

**0.4 M ELUANT**

**0.1 M LOADED ELUATE**

HOT WATER

COLD WATER

| 1 | 2 | 3 | 4 | 5 | 6 | 7 | 8 | 9 | 10 | 11 | 12 | 13 | 14 | 15 | 16 | 17 | 18 | 19 | 20 |

SEGMENT ELUATE LAUNDER

ELUATE FRACTIONS PUMPED TO FURTHER PROCESSING. TWO PUMPS SHOWN — SIX OR MORE PUMPS MAY BE USED.

EP 0 335 538 A2

FIGURE 4

FIGURE 5